# FASCICULE DE BREVET EUROPEEN

(11) **EP 0 753 724 B1**
(45) Date de publication et mention de la délivrance du brevet: **12.09.2001**
(21) Numéro de dépôt: 96401458.3
(22) Date de dépôt: 02.07.1996
(51) Int. Cl.: G01J 3/10

(54) **Spectrophotomètre portatif et autonome pour l'analyse spectrale aux ultraviolets, d'échantillons liquides**
Tragbares autonomes Spektrophotometer für die Spektralanalyse im Ultravioletten von flüssigen Proben
Portable autonomous spectrophotometer for the spectral analysis in the ultra violet, of liquid samples

(30) Priorité: 07.07.1995 FR 9508407
(43) Date de publication de la demande: 15.01.1997
(73) Titulaire: SECOMAM S.A., 95334 Domont Cédex (FR)
(72) Inventeur: Constant, Daniel, 95330 Domont (FR); Rigal, Jean-Marc, 95330 Domont (FR); Thomas, Olivier, 73000 Barberaz (FR)
(74) Mandataire: de Saint-Palais, Arnaud Marie

(56) Documents cités:
- GB-A- 2 251 939
- US-A- 3 819 981
- US-A- 4 438 370
- US-A- 4 742 276
- US-A- 5 128 593
- ELECTRONICS WORLD AND WIRELESS WORLD, vol. 100, no. 1702, Septembre 1994, SURREY GB, pages 752-754, XP000468105 N.N.: "switches for lighting"

## Description

La présente invention concerne un spectrophotomètre portatif et autonome pour l'analyse spectrale aux ultraviolets, d'échantillons liquides dont on veut étudier la composition.

On sait que les spectrophotomètres classiques font intervenir une source lumineuse qui éclaire, par l'intermédiaire d'une optique convergente, une cuve présentant, dans l'axe de la source, au moins deux parois opposées transparentes, cette cuve contenant le liquide à analyser.

Le faisceau lumineux traversant la cuve est appliqué sur la fente d'entrée d'un spectrographe, par exemple par l'intermédiaire d'une lentille focalisatrice.

Les ondes qui pénètrent à l'intérieur de ce spectrographe sont envoyées sur un élément dispersif (prisme, réseau ...) qui les dévie différemment en fonction de leur longueur d'onde. Les ondes ainsi déviées sont alors focalisées et donnent ainsi, dans une zone de détection, une succession d'images de la source qui constitue le spectre de la radiation. Ce spectre est ensuite analysé grâce à un système optoélectronique de détection couplé à un circuit électronique de traitement.

Il s'avère que les sources lumineuses utilisées dans les spectrophotomètres de laboratoire ont une consommation énergétique beaucoup trop importante pour être utilisables dans des appareils portatifs et autonomes.

C'est la raison pour laquelle on a tenté d'utiliser des lampes flash de type classique qui, en raison de leur fonctionnement impulsionnel, sont beaucoup plus économes sur le plan énergétique.

Toutefois, cette solution n'a pas permis d'obtenir de bons résultats, et ce, en raison des caractéristiques du rayonnement émis par le flash (mauvaises propriétés spectrales, présence de raies, faible énergie pour les hautes fréquences). En outre, l'arc développé dans la lampe flash est instable.

Par ailleurs, les autres sources lumineuses utilisées pour effectuer en laboratoire des analyses spectrales UV, et en particulier les lampes à décharge dans des gaz, ne conviennent pas, a priori, à la réalisation d'appareils portatifs et autonomes fonctionnant de façon discontinue, du fait qu'ils exigent à chaque mise en service un cycle d'allumage comprenant successivement un préchauffage, l'émission d'une impulsion d'amorçage à haute tension, et une période de stabilisation plus ou moins longue avant d'atteindre un régime permanent suffisamment stable pour effectuer des mesures répétitibles.

Pour réduire la taille des appareils utilisant ces lampes à décharge, on a proposé notamment par les brevets US-A-4 742 276 et US-A-5 128 593, un circuit d'alimentation faisant intervenir un générateur d'impulsions dont la largeur des impulsions est pilotée par un circuit de contre-réaction, en fonction du courant circulant dans la lampe. Néanmoins, cette solution, relativement coûteuse ne permet pas de résoudre les problèmes que pose la réalisation d'un appareil portatif et autonome.

L'invention propose donc une solution permettant de surmonter ce préjugé et donc de réaliser des appareils portatifs de faibles dimensions et cependant à très grande autonomie, ces appareils utilisant des lampes à décharge présentant d'excellentes propriétés spectrales et dont la durée de vie est considérablement augmentée.
Selon l'invention, cette solution consiste à utiliser une lampe à décharge comprenant, à l'intérieur d'une enceinte transparente aux UV renfermant un gaz sous basse pression, une cathode, une anode et des moyens de chauffage de la cathode, ainsi que des moyens d'alimentation en énergie électrique de la lampe, et qu'un' circuit de commande apte à commander pour chacune des analyses à effectuer, une séquence opératoire automatique un cycle complet d'allumage, cette séquence comportant:
- l'application sur les moyens de chauffage de la lampe d'un courant permettant d'assurer un préchauffage de la lampe, cette application se poursuivant pendant une période de temps de préchauffage déterminé T₁,
- à la fin de la période de préchauffage T₁, l'application entre l'anode et la cathode de la lampe d'une impulsion de haute tension présentant une période d'amorçage prédéterminée T₂, apte à provoquer l'amorçage de la lampe,
- à la fin de la période d'amorçage T₂, la régulation de l'énergie électrique appliquée à la lampe pour la maintenir à une valeur nominale et ce, pendant une période de stabilisation énergétique déterminée T₃ du rayonnement lumineux émis par la lampe,
- l'acquisition, par le système de détection optoélectronique, d'informations relatives au spectre engendré dans la zone de détection,
- l'interruption automatique de l'alimentation de la lampe à la fin de la phase d'acquisition.

Il convient de noter que la stabilisation en température de la lampe n'est pas nécessaire dans le cas où la détection optoélectronique est effectuée à l'aide d'une barrette de diodes : dans ce cas, la lecture de cette barrette est quasiment instantanée. L'acquisition peut donc se faire avant la stabilisation pour peu que la temporisation soit très précise entre l'allumage de la lampe et la lecture.

Avantageusement, la lampe utilisée pourra être une lampe Deutérium de type L 3381 de la Société Hamamatsu.

Grâce à ces dispositions, il devient possible de réaliser un appareil d'analyse portable, de petite taille et qui présente cependant une grande autonomie avec une durée de vie de la lampe du même ordre que celle de l'ensemble de l'appareil (pas de changement de lampe à prévoir).

Un tel appareil pourra être utilisé pour analyser "in situ" par exemple, des eaux résiduelles urbaines, des eaux industrielles, des eaux de ruissellement. Dans ce type d'application, l'analyse pourra porter sur la mesure des nitrates, des matières en suspension, des DBO (demandes biochimiques en oxygène), des DCO (demandes chimiques en oxygène), de carbone organique total, de l'azote, des détergents, du chrome VI, etc...

Un mode d'exécution de l'invention sera décrit ci-après, à titre d'exemple non limitatif, avec référence aux dessins annexés dans lesquels :
Les figures 1 et 2 sont des représentations schématiques d'un spectrophotomètre, vu de dessus (figure 1) et vu de côté (figure 2) ;
La figure 3 est un schéma synoptique du circuit électronique associé au spectrophotomètre illustré sur les figures 1 et 2 ;
La figure 4 est un logigramme des commandes d'alimentation de la lampe et de l'acquisition des données recueillies sur la barrette de diodes photodétectrices du circuit d'analyse.

Dans cet exemple, le spectrophotomètre fait intervenir un puits de cuve 1 dans lequel peuvent s'engager deux tubes à essais en matière transparente aux UV 2, 3, par exemple en quartz, contenant des échantillons de liquide dont on veut obtenir le spectre d'absorption.

Ces deux tubes à essais 2, 3 sont éclairés par une source lumineuse 4 pouvant consister en une lampe Deutérium, par l'intermédiaire d'une lentille convergente L₁ conçue de manière à former l'image de la zone de décharge de la lampe 4 au niveau de la fente d'entrée F d'un spectrographe SP.

Ce spectrographe comprend essentiellement un miroir concave MC apte à réfléchir le rayonnement incident provenant de la fente sur un réseau réflectif R. Celui-ci est placé de manière à réfléchir le faisceau lumineux en le décomposant (par déviation) en fonction des longueurs d'ondes des rayonnements qui le compose sur le miroir concave MC. Ce dernier renvoie le faisceau lumineux décomposé sur une barrette de diodes photosensibles DP placée dans le plan focal image du système optique fente F/miroir concave MC.

De ce fait, au lieu d'obtenir au niveau de ce plan focal image, une image unique de la fente F, comme ce serait le cas si l'on supprimait le réseau R, on obtient une multiplicité d'images s'échelonnant en fonction des longueurs d'ondes, cette succession d'images constituant le spectre que l'on veut analyser.

Les informations délivrées par la barrette sont alors transmises à un circuit de traitement CT à microprocesseur conçu de manière à déterminer et à afficher, par exemple sur un afficheur AF, la teneur des échantillons en éléments recherchés.

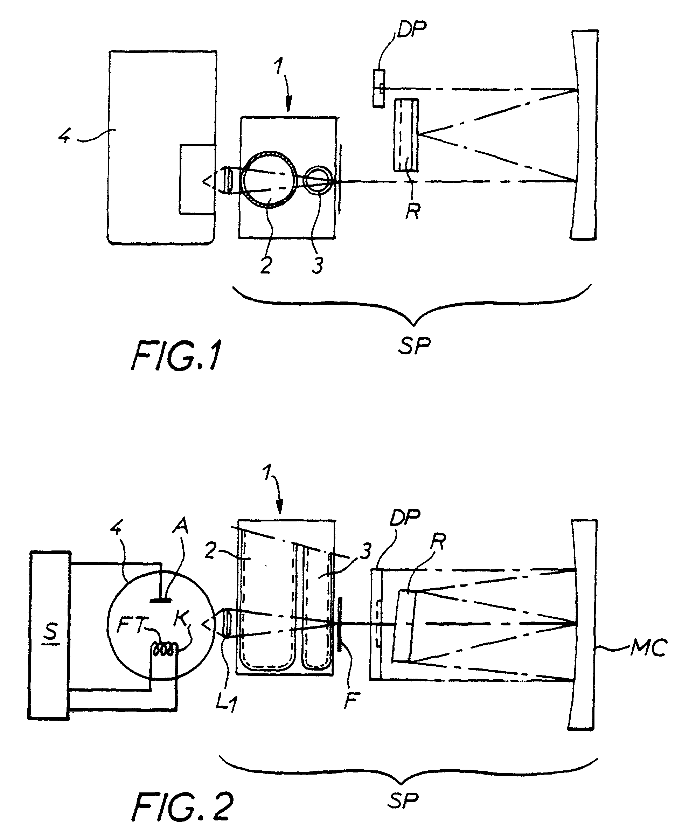

Sur la figure 2, la lampe 4 a été représentée schématiquement par un tube renfermant un gaz sous basse pression et comprenant une anode et une cathode K comprenant un filament thermoélectrique FT dans lequel peut circuler un courant de chauffage.

L'énergie électrique nécessaire au fonctionnement de l'appareil est assurée par une source de courant S remplaçable (piles) ou rechargeable (batteries).

Cette source S alimente directement le circuit de traitement à microprocesseur CT ainsi que les organes de dialogue AF qui lui sont associés (afficheur, clavier, imprimante, voire même transmetteur téléphonique ou radio).

L'alimentation de la lampe s'effectue par l'intermédiaire d'un ensemble sélecteur/convertisseur/régulateur 6 piloté par le circuit de traitement CT et comportant trois circuits d'alimentation, à savoir :
- un circuit d'alimentation 7 du filament FL de la lampe 4 qui délivre un courant basse tension, par exemple de 12V en vue d'effectuer la phase de préchauffage,
- un circuit convertisseur 8 apte à délivrer une impulsion de surtension (500 à 600V) entre anode A et cathode K en vue de réaliser l'amorçage de la lampe 4,
- un circuit d'alimentation 9 régulé en puissance qui permet de maintenir le point de fonctionnement de la lampe 4 (tension/intensité) dans la zone de décharge luminescente, après l'amorçage.

Le circuit de traitement à microprocesseur CT est en outre conçu de manière à procéder à des échantillonnages des informations détectées par la barrette de diodes DP.

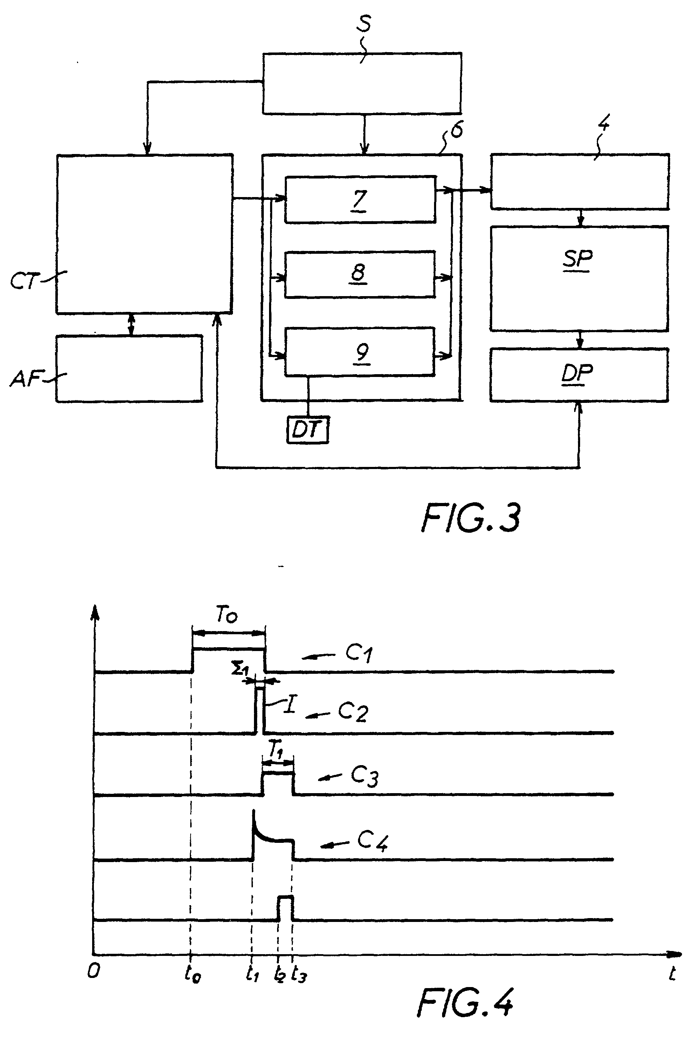

Cet échantillonnage s'effectue lors de chaque cycle d'analyse en fin de période de stabilisation de l'émission lumineuse de la lampe 4 conformément au logigramme illustré sur la figure 4 dans lequel il apparaît que :
- à l'instant t₀ où l'opérateur enclenche un cycle d'analyse par exemple en appuyant sur un poussoir du clavier AF, le circuit d'alimentation 7 applique sur le filament FT un courant de préchauffage pendant une période T₀ par exemple de 10 secondes (courbe C₁),
- à un instant t₀ + T₀ - δ₁, le circuit convertisseur 8 applique entre l'anode et la cathode de la lampe une impulsion de surtension I de durée δ qui provoque l'amorçage de la lampe et l'établissement d'une décharge (courbe C₂),
- à l'instant t₁ = t₀ + T₀, le circuit d'alimentation 9 prend le relais du circuit convertisseur 8 pour appliquer entre cathode K et anode A un courant régulé en puissance maintenant le point de fonctionnement de la lampe sur un point fixe de la courbe de décharge luminescente normale (V/I) de la lampe (courbe C₃) : cette application de courant régulé est maintenue jusqu'à un instant T₃ pendant une période de temps T₁ par exemple de 2 secondes au cours de laquelle on obtient une stabilisation de l'énergie lumineuse émise par la lampe 4 (courbe C₄),
- à un instant t₂ = t₃ - δ₂, le circuit de traitement CT commande un échantillonnage des informations détectées par la barrette de diodes (courbe C₅) : cet échantillonnage peut, par exemple, comprendre le transfert des données délivrées par les diodes DP dans un registre tampon et la lecture de ce registre par le microprocesseur inclus dans le circuit CT : le circuit CT peut alors effectuer le traitement des données qu'il vient de lire en vue de déterminer la composition de l'échantillon de liquide,
- à l'instant t₃, le circuit CT commande l'interruption de l'alimentation de la lampe 4.

Il apparaît donc que pour chacune des séquences d'analyse, la lampe 4 subit un cycle complet d'allumage et ne reste allumée que pendant le temps strictement nécessaire pour effectuer l'échantillonnage.

Grâce à ces dispositions, il devient possible d'utiliser, en mode discontinu, une lampe 4 destinée à fonctionner en continu et qui présente une grande pureté spectrale. De ce fait, on réduit considérablement la consommation énergétique de l'appareil et on augmente donc en conséquence son autonomie.

Par ailleurs, on s'affranchit des problèmes dus aux émissions calorifiques de la lampe 4, ce qui permet d'atteindre une très haute miniaturisation (absence d'éléments dissipateurs de chaleur).

Avantageusement, il sera possible d'asservir le courant de chauffage appliqué au filament FT de la lampe 4 pour tenir compte de la température ambiante mesurée par un capteur de température DT.

Bien entendu, l'invention ne se limite pas au mode d'exécution précédemment décrit.

Ainsi, par exemple, l'appareil pourra avantageusement comprendre une cuve 1 pouvant recevoir aussi bien des échantillons liquides contenus dans des récipients transparents qu'un interface optique permettant, grâce à des fibres optiques, de transmettre le rayonnement lumineux émis par la lampe 4 à un organe d'exposition extérieur pouvant être disposé "in situ" par exemple dans un écoulement de liquide, et d'appliquer le rayonnement transmis par le liquide sur la fente F du spectrographe SP.

## Revendications

1. Spectrophotomètre portatif et autonome pour l'analyse spectrale d'échantillons liquides dont on veut étudier la composition, ce spectrophotomètre faisant intervenir une source lumineuse (4) éclairant le liquide à analyser, le faisceau lumineux traversant le liquide étant transmis sur la fente d'entrée (F) d'un spectrographe (SP) qui comprend un élément dispersif (R) permettant d'engendrer un spectre sur un système optoélectronique de détection (DP) couplé à un circuit électronique de traitement (CT),
**caractérisé en ce que** la source lumineuse (4) consiste en une lampe à décharge comprenant, à l'intérieur d'une enceinte transparente aux UV renfermant un gaz sous basse pression, une cathode (K), une anode (A) et des moyens de chauffage (FT) de la cathode (K), ainsi que des moyens d'alimentation en énergie électrique (S, 7, 8, 9) de la lampe (4) et un circuit de commande apte à commander pour chacune des analyses à effectuer, une séquence opératoire automatique comprenant un cycle complet d'allumage, cette séquence comportant:
- l'application sur les moyens de chauffage de la lampe d'un courant permettant d'assurer un préchauffage de la lampe (4), cette application se poursuivant pendant une période de temps de préchauffage prédéterminée (T₁),
- à la fin de la période de préchauffage (T₁), l'application entre l'anode (A) et la cathode (K) de la lampe (4) d'une impulsion de haute tension présentant une période d'amorçage prédéterminée (T₂), apte à provoquer l'amorçage de la lampe (4),
- à la fin de la période d'amorçage (T₂), la régulation de l'énergie électrique appliquée à la lampe (4) pour la maintenir à une valeur nominale et ce, pendant une période de stabilisation énergétique déterminée (T₃) du rayonnement lumineux émis par la lampe (4),
- l'acquisition, par le système de détection optoélectronique (DP), d'informations relatives au spectre engendré dans la zone de détection,
- l'interruption automatique de l'alimentation de la lampe (4) *à* la fin de la phase d'acquisition.

2. Spectrophotomètre selon la revendication 1,
**caractérisé en ce que** la susdite acquisition se produit en fin de la phase de régulation, lorsque le rayonnement lumineux émis par la lampe (4) s'est stabilisé.

3. Spectrophotomètre selon la revendication 1,
**caractérisé en ce que** la susdite acquisition s'effectue avant la stabilisation thermique de la lampe, après une période de temps précise suivant l'allumage de la lampe (4).

4. Spectrophotomètre selon l'une des revendications précédentes,
**caractérisé en ce que** la susdite lampe (4) est une lampe Deutérium.

5. Spectrophotomètre selon l'une des revendications précédentes,
**caractérisé en ce qu'**il comprend des organes de dialogue associés au circuit de commande et de traitement (CT) d'informations tel qu'un afficheur, un clavier (AF), une imprimante et/ou un transmetteur téléphonique ou radio.

6. Spectrophotomètre selon l'une des revendications précédentes,
**caractérisé en ce qu'**il comprend des moyens permettant d'asservir le courant de chauffage appliqué aux susdits moyens de chauffage (FT) en fonction de la température ambiante mesurée par un capteur de température (DT).

7. Spectrophotomètre selon l'une des revendications précédentes,
**caractérisé en ce que** le susdit circuit de commande et le circuit électronique de traitement (CT) sont gérés par un même microprocesseur.

## Claims

1. Autonomous portable spectrophotometer for spectrally analysing the composition of liquid samples, said spectrophotometer introducing a light source (4) illuminating the liquid to be analysed, the light beam traversing the liquid being transmitted onto the inlet aperture (F) of a spectrograph (SP) which includes a dispersing element (R) for generating a spectrum on an opto-electronic detection system (DP) coupled to an electronic treatment circuit (CT),
**characterised in that** the light source (4) consists of a discharge lamp including inside a transparent chamber containing a gas under low pressure a cathode (K), an anode (A) and means (FT) for heating the cathode (K), as well as means (S, 7, 8, 9) for feeding the lamp (4) with electric energy, and a control circuit to control for each of the analyses to be carried out, an automatic operational sequence including a complete lighting cycle, said sequence comprising :
- applying to the means for heating the lamp a current to ensure a preheating of the lamp (4), this application being continued for a predetermined preheating period of time (T1),
- at the end of the preheating period (T1), applying between the anode (A) and the cathode (K) of the lamp a high voltage pulse having a predetermined starting time (T2) for provoking starting of the lamp (4),
- at the end of the starting period (T2), regulating the electric energy applied to the lamp (4) so as to keep it at a nominal value for a specific energy stabilisation period (T3) of the luminous radiation emitted by the lamp (4),
- the opto-electronic detection system (DP) acquiring information relating to the spectrum generated in the detection zone,
- the automatic interruption of feeding of the lamp (4) at the end of the acquisition phase.

2. Spectrophotometer according to claim 1,
**characterised in that** said acquisition occurs at the end of the regulation phase when the luminous radiation emitted by the lamp (4) has stabilised.

3. Spectrophotometer according to claim 1,
**characterised in that** said acquisition is carried out before the lamp has thermically stabilised after a specific period of time following lighting of the lamp (4).

4. Spectrophotometer according to one of the preceding claims,
**characterised in that** said lamp (4) is a Deuterium lamp.

5. Spectrophotometer according to one of the preceding claims,
**characterised in that** it includes dialogue elements associated with the information control and processing circuit (CT), such as a display unit, a keyboard (AF), a printer and/or a telephone or radio transmitter.

6. Spectrophotometer according to one of the preceding claims,
**characterised in that** it includes means for controlling the heating current applied to said heating means (FT) according to the ambient temperature measured by a temperature sensor (DT).

7. Spectrophotometer according to one of the preceding claims,
**characterised in that** said control circuit and the electronic processing circuit (CT) are managed by a given microprocessor.

## Patentansprüche

1. Tragbares und autonomes Spektralphotometer für die Spektralanalyse von flüssigen Prüfmustern, deren Zusammensetzung untersucht werden soll, wobei dieses Spektralphotometer eine Lichtquelle (4) verwendet, die die zu analysierende Flüssigkeit beleuchtet und der Lichtstrahl, der die Flüssigkeit durchquert, an den Eingangsschlitz (F) eines Spektrographen (SP) übertragen wird, der ein Streuelement (R) besitzt, mit dem sich ein Spektrum auf einem optoelektronischen Sensorsystem (DP) erzeugen lässt, das an einen elektronischen Verarbeitungsschaltkreis (CT) gekoppelt ist,
**dadurch gekennzeichnet, dass** die Lichtquelle (4) aus einer Entladungslampe besteht, die innerhalb eines für UV-Strahlen transparenten Behältnisses ein Gas, das unter niedrigem Druck steht, eine Kathode (K), eine Anode (A) und Heizmittel (FT) für die Kathode (K) sowie Mittel (S, 7, 8, 9) für die Versorgung der Lampe (4) mit elektrischem Strom und einen Steuerschaltkreis beinhaltet, der in der Läge ist, für jede durchzuführende Analyse eine automatische Betriebssequenz zu steuern, die einen kompletten Beleuchtungszyklus beinhaltet, wobei sich diese Sequenz wie folgt zusammensetzt:
- Anwendung eines Stroms auf die Heizmittel der Lampe, mit dem sich das Vorwärmen der Lampe (4) gewährleisten lässt, wobei diese Anwendung während eines vorgegebenen Vorwärmzeitraums (T₁) fortgesetzt wird.
- Anwendung eines Hochspannungsimpulses zwischen Anode (A) und Kathode (K) der Lampe (4) am Ende des Vorwärmzeitraums, wobei dieser Hochspannungsimpuls einen vorgegebenen Zündzeitraum (T₂) beinhaltet, der in der Lage ist, das Zünden der Lampe (4) hervorzurufen.
- Regulierung der elektrischen Energie, die auf die Lampe (4) angelegt wird, am Ende des Zündzeitraums (T₂), um einen Nennwert beizubehalten, und dies während eines vorgegebenen Zeitraums für die Energiestabilisierung (T₃) der Lichtstrahlung, die von der Lampe ausgesendet wird,
- Erfassung von Informationen über das Spektrum, das in der Sensorzone erzeugt wird, anhand des optoelektronischen Sensorsystems (DP),
- automatische Unterbrechung der Stromversorgung der Lampe (4) am Ende der Erfassungsphase.

2. Spektralphotometer gemäß Patentanspruch 1,
**dadurch gekennzeichnet, dass** die oben genannte Erfassung am Ende der Regulierungsphase erfolgt, wenn sich die Lichtstrahlung, die von der Lampe (4) ausgesendet wird, stabilisiert hat.

3. Spektralphotometer gemäß Patentanspruch 1,
**dadurch gekennzeichnet, dass** die oben genannte Erfassung vor der thermischen Stabilisierung der Lampe und nach Ablauf eines präzisen Zeitraum nach dem Aufleuchten der Lampe (4) erfolgt.

4. Spektralphotometer gemäß einem der voranstehenden Patentansprüche,
**dadurch gekennzeichnet, dass** die oben genannte Lampe (4) eine Deuteriumlampe ist.

5. Spektralphotometer gemäß einem der voranstehenden Patentansprüche,
**dadurch gekennzeichnet, dass** es Dialogorgane beinhaltet, die dem Steuer- und Verarbeitungsschaltkreis (CT) zugeordnet sind, wie z.B. ein Anzeigegerät, eine Tastatur (AF), einen Drucker und/oder eine Telefon- oder Funkübertragungsvorrichtung.

6. Spektralphotometer gemäß einem der voranstehenden Patentansprüche,
**dadurch gekennzeichnet, dass** es Mittel beinhaltet, die eine Regelung des Heizstroms, der an die genannten Heizmittel (FT) angelegt wird, in Abhängigkeit von der Raumtemperatur zulassen, die von einem Temperaturfühler (DT) gemessen worden ist.

7. Spektralphotometer gemäß einem der voranstehenden Patentansprüche,
**dadurch gekennzeichnet, dass** der oben genannte Steuerschaltkreis und der elektronische Verarbeitungsschaltkreis (CT) von ein und demselben Mikroprozessor gesteuert werden.
